# EUROPÄISCHE PATENTSCHRIFT

(11) **EP 2 408 590 B1**
(45) Veröffentlichungstag und Bekanntmachung des Hinweises auf die Patenterteilung: **11.12.2013**
(21) Anmeldenummer: 10714157.4
(22) Anmeldetag: 17.03.2010
(51) Int. Cl.: B23Q 1/00, F16M 7/00

(54) **VERFAHREN UND VORRICHTUNG ZUM EINRICHTEN EINER MASCHINE**
METHOD AND APPARATUS FOR ADJUSTING A MACHINE
PROCÉDÉ ET DISPOSITIF POUR INSTALLER UNE MACHINE

(30) Priorität: 17.03.2009 CH 409092009
(43) Veröffentlichungstag der Anmeldung: 25.01.2012
(73) Patentinhaber: Digi Sens Ag, 3280 Murten (CH)
(72) Erfinder: LUSTENBERGER, Martin, CH-1752 Villars sur Glâne (CH)
(74) Vertreter: Stump, Beat
(86) Internationale Anmeldenummer: PCT/CH2010/000073
(87) Internationale Veröffentlichungsnummer: WO 2010/105381

(56) Entgegenhaltungen:
- WO-A1-00/11395
- DE-A1- 2 718 543
- DE-A1- 19 650 651

## Beschreibung

Die vorliegende Erfindung betrifft einen Maschinenfuss nach Anspruch 1, eine Maschine nach Anspruch 10 und ein Verfahren zum Einrichten einer Maschine nach Anspruch 12.

Moderne Maschinen, insbesondere Werkzeugmaschinen oder Bearbeitungszentren besitzen Abmessungen von leicht mehreren Metern und einem Gewicht, das bis zu 15 t oder mehr reichen kann. Dabei werden die Werkstücke im µm-Bereich hochpräzis bearbeitet, z.B. in der Elektroerosion, aber auch durch andere Verfahren. Auch können je nach der Art der Bearbeitung erhebliche Kräfte am Werkzeug bzw. am Werkstück wirken; zudem können die Werkstücke selbst ein Gewicht von mehreren Tonnen erreichen.

Dies setzt hohe Anforderungen insbesondere an die Steifigkeit des Maschinengestells, das die Bearbeitungskräfte aufnimmt und die gegenseitige Lage der Baugruppen, insbesondere der Führungen der Maschine definiert. Das Maschinengestell ist mindestens dreifach (d.h. auf einem Dreibein) am Boden abgestützt. Je nach Abmessungen und Masse der Maschine kommen auch eine grössere Anzahl von Abstützungen, z.B. sieben, neun oder mehr als zehn in Frage. Die Abstützungen sind in der Regel mit einer Höhenverstellung ausgerüstet (die wiederum an einem Maschinenfuss angeordnet ist), die erlaubt, Unebenheiten des Bodens auszugleichen, so dass das Gestell im vorgeschriebenen Mass gestützt und damit vor Verwindung geschützt ist, welche trotz der hohen Steifigkeit des Gestells die Bearbeitungsgenauigkeit beeinträchtigt, bis hin zur Produktion von Ausschuss.

Es wird nun mit zunehmender Anzahl der Abstützungen schwieriger, eine Maschine einzurichten, da im konkreten Fall die richtige Höhe einer Abstützung auf unebenem Boden nicht im Voraus zu ermitteln ist, sondern durch laufend veränderte Einstellungen beim Einrichten der Maschine so gut wie möglich gefunden werden muss. Aufgrund des notwendigerweise sehr steifen Gestells ist ein unzulässiger Verzug, der die geforderte Bearbeitungsgenauigkeit beeinträchtigt, optisch kaum kontrollierbar, so dass im Ergebnis die Höhenverstellungen in langwieriger Arbeit auch nach Gefühl eingestellt werden müssen.

Auch dann, wenn Hilfsmittel wie Lasermessmittel zur Verfügung stehen, ist die Einstellarbeit problematisch. Zwar kann dann eine Abweichung der Ausrichtung des Gestells, z.B. von der Horizontalen, bzw. die jeweilige korrekte Ausrichtung festgestellt werden. Hingegen verbleibt ein nach wie vor langwieriger Prozess, bis die korrekte Ausrichtung erreicht ist, da die Korrektur einer der Höhenverstellungen stets dazu führt, dass die anderen Höhenverstellungen nachjustiert werden müssen. Zudem ist oft unklar, welche Höhenverstellung in welcher Richtung korrigiert werden muss, ganz zu schweigen vom Mass der erforderlichen Korrektur.

Solche Probleme lassen sich weitgehend vermeiden, wenn die Maschine auf ein individuell erstelltes Fundament gesetzt wird, das keine Unebenheiten bzw. definierte Verankerungspunkte aufweist.

Einerseits ist es nun so, dass aufgrund der fortschreitenden Flexibilität der Fertigungsflächen Fundamente, die den Maschinenstandort buchstäblich zementieren, zunehmend unerwünscht sind, während gleichzeitig Maschinen und Werkstücke bei fortschreitender Bearbeitungsgenauigkeit grösser und schwerer werden. Zudem können sich Bodenunebenheiten fortlaufend neu bilden, z.B. bei Änderung der Bodenbelastung durch neue Anordnung von Maschinen. Solche neue Bodenunebenheiten sind insbesondere kaum vermeidbar, wenn die Fertigungsfläche durch den Boden eines Stockwerks gebildet wird, also nicht auf dem Untergrund ruht.

DE-2718543 offenbart einen Maschinenfuss nach dem Oberbegriff des Anspruchs 1, mit einem Deformationsmesselement.

Entsprechend ist es die Aufgabe der vorliegenden Erfindung, eine Vorrichtung und ein Verfahren zu schaffen, um Maschinen der genannten Art verbessert einrichten zu können.

Diese Aufgabe wird durch einen Maschinenfuss nach Anspruch 1, durch eine Maschine nach Anspruch 10 sowie durch ein Verfahren nach Anspruch 12, ein Datenverarbeitungssystem nach Anspruch 13, ein Computerprogramm nach Anspruch 14 und ein Computerprogrammprodukt nach Anspruch 15 gelöst.

Dadurch, dass das Messelement die sich aus der durch die Tragelement übertragenen Kraft ergebende, vorbestimmte biegeelastische Deformation der Tragelement bestimmt, ist diese Kraft und damit das auf dem Maschinenfuss lastende Maschinengewicht bekannt. Dadurch, dass das Tragelement ein Teil der Höhenverstellung des Maschinenfusses ist, kommt keine zusätzliche federnde Komponente in der Abstützung der Maschine dazu, die negative Rückwirkungen auf das Gestell, insbesondere auf dessen dynamisches Verhalten, zur Folge hätte. Auch kann nun ohne weiteres die Höhe des Maschinenfusses derart eingestellt werden, dass das bestimmungsgemässe Gewicht auf diesem lastet, wobei diesbezüglich eine objektive Kontrolle möglich ist. Das Gefühl, bzw. das bekannte "goldene Händchen" des Operateurs entfällt. Die richtige Einstellung bedarf nicht mehr der Erfahrung und des Gefühls und/oder der Unterstützung durch weitere, indirekte Messmethoden. Das Soll-Gewicht ist grundsätzlich aus der konstruktiven Auslegung des Gestells bekannt oder jederzeit über die Methode der finiten Elemente bestimmbar. Zudem ist es so, dass der erfindungsgemässe Maschinenfuss die üblichen Abmessungen besitzt, also nicht höher ist, also insofern Rückwirkungen auf das Gestell bzw. weitere Nachteile unterbleiben.

Dadurch, dass eine biegeelastische Deformation der Tragelements als Bestandteil des Maschinenfusses (da Bestandteil dessen Höhenverstellung) gemessen wird, wird die elastische Deformation eines Elements gemessen, dessen mechanische Eigenschaften (Steifigkeit, Federungseigenschaften) im Hinblick auf ein jeweiliges Gestell zugelassen, d.h. ohne unzulässige Rückwirkung sind.

Ebenso erfindungsgemäss ist eine Maschine nach Anspruch 10, mit erfindungsgemässen Maschinenfüssen, was erlaubt, das Gestell weiter zu optimieren, da die Steifigkeit nicht zusätzlich auf fehlerhafte Abstützung ausgelegt werden muss.

Das erfindungsgemässe Verfahren nach Anspruch 12 wiederum erlaubt eine besonders kurze Einrichtungszeit, die ohne weitere Hilfsmittel zwangsläufig zu einer objektiv richtigen Höheneinstellung der Maschinenfüsse führt.

Die Erfindung ist anhand der nachstehenden Figuren näher beschrieben. Es zeigt:
- Fig. 1a: eine seitliche Ansicht eines Maschinenfusses mit einer Höhenverstellung gemäss dem Stand der Technik,
- Fig. 1b: einen Querschnitt entlang der Linie AA von Fig. 1a
- Fig. 2a: einen Querschnitt entlang der Linie AA von Fig. 1a, wobei der Maschinenfuss von Fig. 1a und 1b erfindungsgemäss modifiziert worden ist
- Fig. 2b: eine Ansicht von oben auf den Maschinenfuss von Fig. 2a,
- Fig. 2c: den Querschnitt von Fig. 2a, wobei der erfindungsgemässe Maschinenfuss in belastetem Zustand dargestellt ist, und

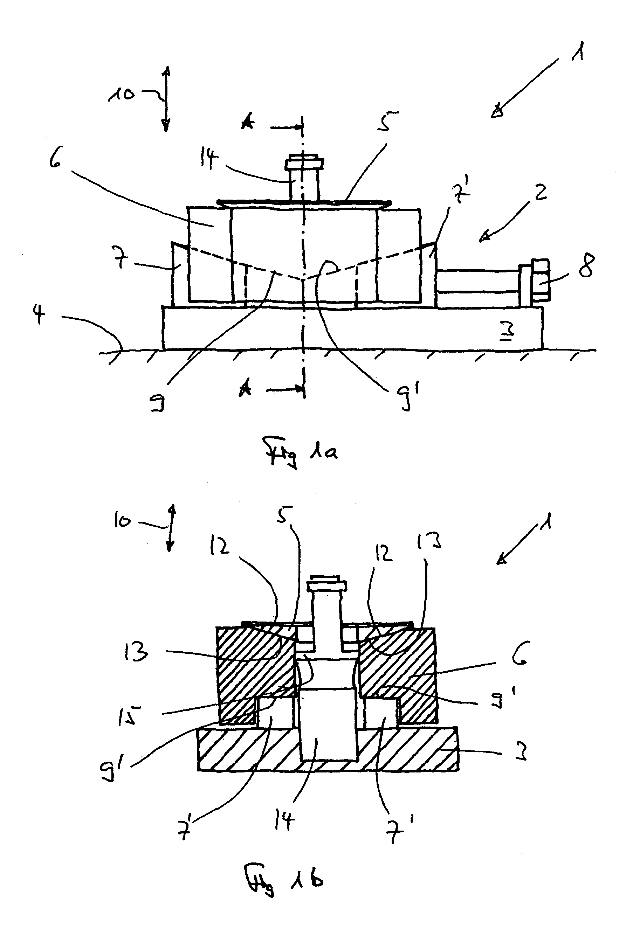

Fig. 1a zeigt eine seitliche Ansicht eines dem Fachmann bekannten Maschinenfusses 1 nach dem Stand der Technik, der eine Höhenverstellung 2 aufweist und auf einer Grundplatte 3 ruht, die wiederum auf dem Boden 4 z.B. einer Fertigungshalle liegt. Dargestellt ist weiter eine als Krafteinleitungselement ausgebildete Lastaufnahmeplatte 5, die auf einem als Verstellblock 6 ausgebildeten Tragelement aufliegt, wobei dieser seinerseits auf einer als Auflager ausgebildeten Keilanordnung 7,7' ruht, deren Doppelkeile 7 und 7' durch eine Betätigungsschraube 8 auf einander zu und von einander weg bewegt werden können. Die Kontur der Doppelkeile 7 und 7' ist gestrichelt angedeutet, soweit diese in den Verstellblock 6 hineinragen und deshalb von diesem verdeckt sind. Ebenso sind innere Gleitflächen 9,9' des Verstellblocks 6 gestrichelt angedeutet, über die der Verstellblock 6 auf der Keilanordnung 7,7' aufliegt.

Bei der Betätigung der Betätigungsschraube 8 fahren, wie erwähnt, die Doppelkeile 7 bzw. 7' auf einander zu oder von einander weg, so dass der Verstellbock 6 in Richtung des Doppelpfeils 10 nach oben oder nach unten bewegt wird. Die Betätigungsschraube 8, die Keilanordnung 7,7' und die Gleitflächen 9,9' bilden somit die Höhenverstellung 2 des Maschinenfusses 1.

Figur 1b zeigt einen Schnitt durch den Maschinenfuss 1 in der Ebene AA von Figur 1a. Ersichtlich ist die konische Aussenfläche 12 der Lastaufnahmeplatte 5, die auf einer im Wesentlichen gegengleich ausgebildeten Ansenkung 13 des Verstellblocks 6 aufliegt und sich so gegenüber diesem zentriert.

Der Verstellblock 7 seinerseits ist auf der Grundplatte 3 durch einen Verankerungsbolzen 14 zentriert, der mit der Grundplatte-vorzugsweise verschraubt ist und über eine Schulter 15 den Verstellblock 6 in Position hält, auch wenn dieser dem Doppelpfeil 9 entsprechend in der Höhe verstellt wird.

Der Blickrichtung entsprechend ist weiter der Doppelkeil 7' ersichtlich, auf dem der Verstellblock über seine inneren Gleitflächen 9' aufliegt.

Die in den Figuren 1a und 1b gezeigte Anordnung ist im Hinblick auf die niedere Bauhöhe vorteilhaft. Sie erlaubt jedoch keine feinfühlige Verstellung der Höhe, da der Widerstand im Gewinde und zwischen den Keilflächen erheblich ist, und insbesondere der Übergang von der Haft- zur Gleitreibung zur einer ruckartige Drehung der Betätigungsschraube führt und damit in der Regel keine fein aufgelöste Drehung erlaubt, mit der Folge, dass eine beabsichtigte Höhenkorrektur oft eine tatsächlich unbekannte Höhenverstellung zur Folge hat, was den korrekten Einrichtungsprozess weiter erschwert und manchmal verunmöglicht.

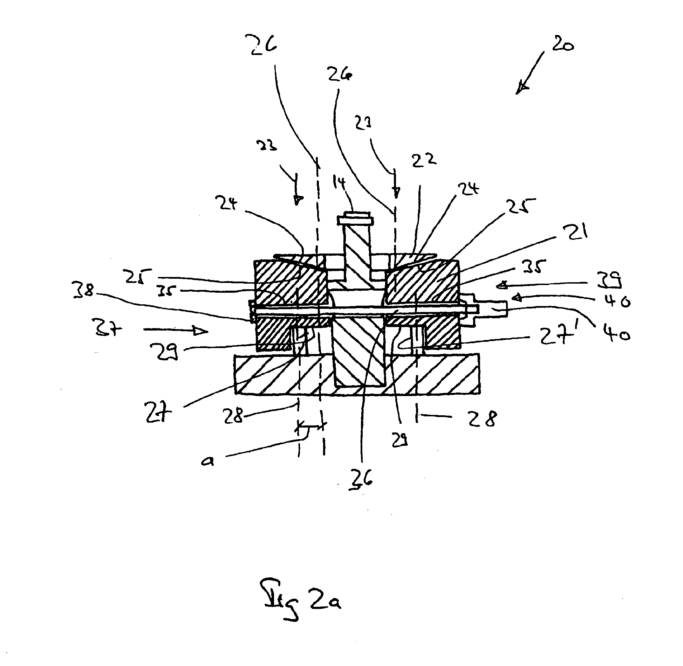

Fig. 2a zeigt einen Querschnitt einer bevorzugten Ausführungsform eines erfindungsgemässen Maschinenfusses 20, wie sie durch die Modifikation eines Maschinenfusses 1 (Figuren 1a und 1b) gebaut werden kann.

Ein massiv ausgebildetes, hier plattenförmiges Tragelement 21 ist durch ein Krafteinleitungselement 22 einer durch die Pfeile 23 symbolisierten Kraft bzw. dem Gewicht einer Maschine ausgesetzt. Das Krafteinleitungselement 22 liegt mit seiner konischen Ringfläche 24 über eine ebenfalls konischen Ansenkung 25 des Tragelements 21 auf diesem auf; jedoch sind die Steigungen der Ringfläche 24 und der Ansenkung 25 verschieden, d.h. die Ringfläche 24 und die Ansenkung 25 sind nicht gegengleich ausgebildet. Die Steigung der Ringfläche 24 ist die Grössere, mit der Folge, dass die Ringfläche 24 mit der Ansenkung 25 nur im vorbestimmten, durch die gestrichelte Linie 26 markierten inneren Bereich Kontakt hält.

Weiter überträgt das das aufgrund seiner Ausbildung in Richtung der Betriebslast steife Tragelement 21 die Gewichtskräfte auf ein durch die Keilbacken 27,27' gebildetes Auflager. Die Keilbacken 27,27' sind schmal ausgebildet und nach aussen versetzt, derart, dass sie das Tragelement 21 nur über den äusseren, durch die gestrichelte Linie 28 markierten Bereich der Gleitflächen 29 stützen.

Es ergibt sich, dass das Krafteinleitungselement 22 die Gewichtskräfte in das Tragelement 21 zentral, und dieses wiederum die Gewichtskräfte gegen aussen versetzt in das durch die Keilbacken 27,27' gebildete Auflager einleitet. Damit sind das Krafteinleitungselement 22, das Tragelement 21 und das hier durch die Keilbacken 27 gebildete Auflager derart ausgebildet, dass die einerseits über das Krafteinleitungselement 22 in das Tragelement 21 und andererseits die über dieses in das Auflager eingeleitete Gewichtskraft in Bezug auf deren Wirkrichtung gegeneinander seitlich versetzt verlaufen, in der Anordnung von Figur 2a um einen Abstand a.

Der Fachmann kann bei weiteren Ausführungsformen im konkreten Fall die wirkenden Kräfte auch anders, z.B. die auf das Tragelement wirkende Betriebslast statt zentral seitlich angreifen lassen, wobei dann bei diesen Ausführungsformen immer die in die Keilanordnung eingeleitete Betriebslast gegenüber der in das Tragelement eingeleiteten Betriebslast seitlich versetzt verläuft.

Eine Bohrung 35 durchsetzt das Tragelement 21 gradlinig und quer zu den Keilbacken 27,27'. In der Bohrung 35 ist ein als Zugstab 36 ausgebildetes Distanzelement angeordnet, das auf der einen Seite 37 des Tragelements 21 z.B. durch eine aufgeschraubte Mutter 38 an diesem verankert ist und auf der anderen Seite 39 des Tragelements 21 in einen Schwingsaitensensor 40 mündet und an diesem betriebsfähig angeordnet ist. Diese Anordnung bildet ein Längenmesselement 41, das den Abstand zwischen zwei Messpunkten am Tragelement 21 erfassen kann: bei der in der Figur dargestellten Ausführungsform liegt der eine Messpunkt auf der Seite 39 des Tragelements, am Ort der Mutter 38, und der andere Messpunkt auf der anderen Seite 40 des Tragelements, am Ort des Sensors 40.

Schwingsaitensensoren sind bekannt; sie besitzen eine in einem Magnetfeld angeordnete Schwingsaite, die von einem Wechselstrom angeregt wird, wobei deren Eigenfrequenz mit der Vorspannung ändert. Im Schwingsaitensensor 40 wird nun eine Änderung des Abstands der beiden Messpunkte (d.h. eine auf das Messelement 41 wirkende Längenänderung) über eine elastische Verformung der Halterung der Schwingsaite in eine veränderte Vorspannkraft der Schwingsaite umgesetzt und die dadurch geänderte Eigenfrequenz der Schwingsaite auf dem Fachmann bekannte Art elektronisch ausgewertet, um die aktuelle Länge bzw. den aktuellen Abstand zwischen den Messpunkten zu erhalten.

Solche in der hier gezeigten bevorzugten Ausführungsform eingesetzte Messelemente 41 mit Schwingsaitensensoren besitzen den Vorteil, dass sie kleinste Längenänderungen, im Bereich von einigen µm zuverlässig detektieren können.

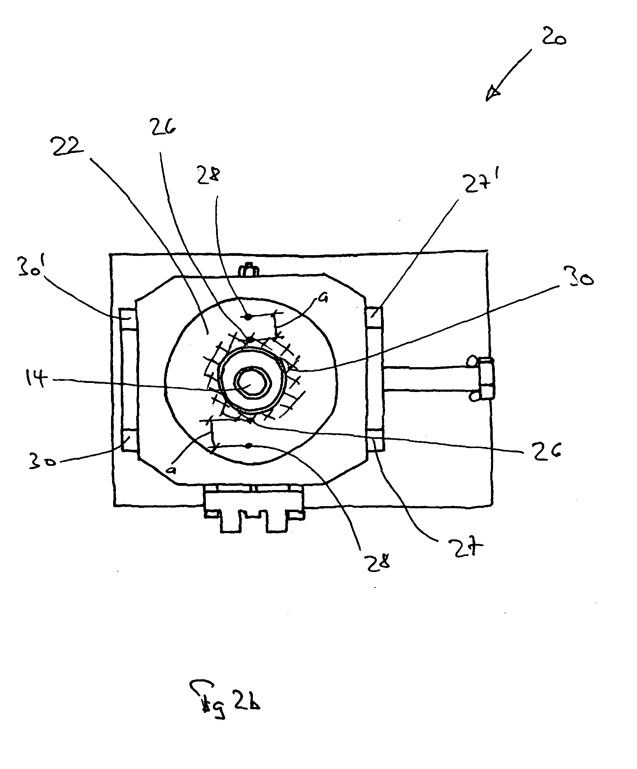

Figur 2b zeigt den Maschinenfuss 20 in einer Ansicht von oben. Dargestellt ist das Krafteinleitungselement 22, das im schraffierten Bereich 30 (entsprechend der gestrichelten Linie 27 von Figur 2a) auf dem Tragelement 21 aufliegt. Weiter dargestellt sind die Keilbacken 27,27' und 30,30', die das Auflager für das Tragelement 21 bilden. Gezeigt ist weiter der Abstand a zwischen den Wirklinien der einerseits über das Krafteinleitungselement 22 in das Tragelement 21 eingeleiteten und andererseits der vom Tragelement 21 in das durch die Keilbacken 27,27' und 30,30' gebildete Auflager weitergeleiteten Gewichtskräfte.

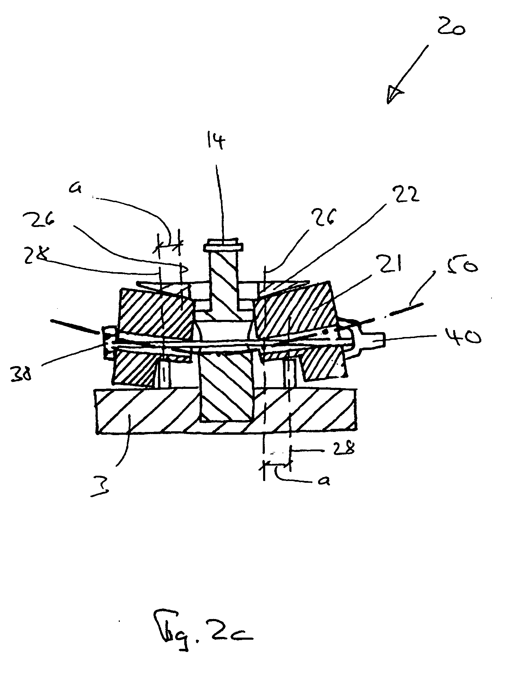

Figur 2c zeigt schematisch den Maschinenfuss 20 in belastetem Zustand. Dank der im Abstand a versetzt zu einander angreifenden Kräfte ist das Tragelement 21 entsprechend der strichpunktiert eingezeichneten Biegelinie 50 durchgebogen. Mit anderen Worten sind die Krafteinleitungsstellen des Krafteinleitungselements 22 (schraffierter Bereich 30 in Figur 2b) und der Auflagebereich für das Auflager am Tragelement 21 (Gleitflächen 29 in Fig. 2a) derart angeordnet, dass die sich unter der Last des Gewichts im Tragelement 21 ergebenden Biegemomente gleich gerichtet sind, derart, dass sich in der Tragelement 21 eine Biegelinie mit nur einer Krümmungsrichtung ergibt.

Die Durchbiegung hat zur Folge, dass sich der Abstand zwischen den beiden an den Seiten 37 und 39 des Tragelements gelegenen Messpunkten (am Ort der Mutter 38 und des Sensors 40) verändert. Der veränderte Abstand wird durch die Messeinrichtung 41 detektiert und durch eine Auswertelektronik in eine Gewichtsangabe umgesetzt, welche über eine geeignete Ausgabeeinheit optisch dargestellt und/oder einem Rechner bzw. einem Datenverarbeitungssystem übermittelt werden kann.

Die in den Figuren 2a bis 2c dargestellte Ausführungsform besitzt den Vorteil, dass sie ein in Richtung der Betriebslast steifes Tragelement, d.h. eine sehr hohe Federkonstante besitzt: bei einer Belastung durch 5t senkt sich ein solchermassen ausgebildeten Ausführungsform das Krafteinleitungselement je nach dessen Dimensionierung z.B. nur um 0,05, bevorzugt um 0,01 und besonders bevorzugt um 0,008 mm ab. Die Rückwirkungen auf das Gestell einer Maschine sind somit unbedenklich. Im Vergleich dazu müsste bei konventionellen Lastzellen mit einer Deformation (Absenkung des Krafteinleitungselements) von 0,5 mm pro 5t gerechnet werden, was den Einsatz solcher Lastzellen im Rahmen des unten beschriebenen Verfahrens verunmöglichen würde.

Weiter besitzt die in den Figuren 2a bis 2c dargestellte Ausführungsform gegenüber einem üblichen Maschinenfuss eine unveränderte Bauhöhe, was für die Aufstellung einer Maschine der eingangs genannten Art wichtig ist.

Zusammenfassend besitzt der erfindungsgemässe Maschinenfuss einer Höhenverstellung 2, die ein Verstellelement (hier als Keilanordnung 7,7' ausgebildetes) und weiter ein massiv ausgebildetes, mit diesem zusammenwirkendes, die Betriebslast übertragendes und in Richtung der Betriebslast steifes Tragelement 21 auf, wobei das Verstellelement und das Tragelement 21 derart ausgebildet sind, dass sich das Tragelement 21 unter Betriebslast vorbestimmt elastisch deformiert, und dass ein Messelement 41 vorgesehen ist, das den Abstand von Messpunkten erfasst, deren Abstand sich aufgrund der vorbestimmten Deformation ändert.

Der Fachmann wird im konkreten Fall das Tragelement derart auslegen, dass dieses im Hinblick auf die Last ein hohes Trägheitsmoment (und damit eine hohe Federkonstante), und im Hinblick auf zuverlässige und genaue Messung die Anordnung von Messpunkten erlaubt, deren Bewegung bei der biegeelastischen Deformation definiert und möglichst gross ist.

Solche Maschinenfüsse sind in den verschiedensten Ausführungsformen denkbar.

Z.B. kann das Krafteinleitungselement derart ausgebildet werden, dass es über einen langgestreckten, sich mittig über das Tragelement erstreckenden Kontaktbereich mit dem Tragelement in Kontakt ist, und wobei der Kontaktbereich vorzugsweise im Wesentlichen parallel zu den Keilflächen der Keilanordnung (bzw. parallel zum Schaft der Betätigungsschraube 8) verläuft. Bevorzugt besitzt solch ein Kontaktbereich eine Breite von 15mm, besonders bevorzugt eine solche von 10mm. Solch eine Anordnung besitzt den Vorteil, dass die Empfindlichkeit für die Messung erhöht und die Hysterese bei verschiedenen Gewichtsbelastungen verkleinert ist. Ebenso kann dann das auf diese Weise ausgebildete Krafteinleitungselement natürlich auf Anschrägungen im Tragelement (analog der konischen Ansenkung 25) ruhen.

Weiter liegt es im Bereich der vorliegenden Erfindung, das Messelement so auszubilden, dass es das Tragelement aussen umschlingt und durch die biegeelastische Deformation entsprechend gelängt wird. Auch hier kann der Fachmann im konkreten Fall ein geeignetes Messelement beliebiger Art auswählen, solange dessen Auflösungsvermögen zur jeweilig gewünschten Auflösung der Gewichtsmessung führt.

Schliesslich kann der Fachmann je nach den konkreten Umständen das Tragelement und die Verstelleinrichtung des Maschinenfusses derart ausbilden, dass die unter Betriebslast sich ergebende vorbestimmte Deformation keine Biegung zur Folge hat, sondern eine durch Schub verursachte Deformation (z.B. würde ein quaderförmiges Tragelement im Längsschnitt zu einem Rhomboid verformt).

Die Flexibilität in der konstruktiven Ausbildung des erfindungsgemässen Maschinenfusses erlaubt die Modifikation zahlreicher, verschiedener Ausbildungen von Maschinenfüssen mit den genannten Vorteilen, insbesondere des im Bereich der Tausendstel-Millimeter gelegenen Arbeitswegs und der geringen Bauhöhe.

Weiter liegt es im Bereich der vorliegenden Erfindung, eine Maschine mit einem Computer bzw. einem Datenverarbeitungssystem auszurüsten, der Daten betreffend der Deformation des Maschinengestells im Hinblick auf dessen Abstützung gegenüber dem Untergrund enthält, wobei im Computer ein Programm gespeichert ist, das im Betrieb die aktuellen Ist-Werte eines oder mehrerer der erfindungsgemässen Maschinenfüsse verarbeitet und entsprechend der Daten über die Deformation des Maschinengestells Soll-Einstellungen für die dem einen oder mehreren Maschinenfüsse zugeordneten Anordnungen zur Höhenverstellung generiert. Die Daten betreffend der Deformation des Maschinengestells können einerseits auf das jeweilige Gestell ausgerichtete Berechnungen umfassen, oder andererseits ein vereinfachtes Modell, das die Verformung des Maschinengestells in geeigneter Art simuliert. Das gespeicherte Programm berechnet dann z.B. die Rückwirkung fehlerhaft eingestellter Höhenverstellungen aus der Ist-Last des zugeordneten Maschinenfusses auf das Gestell, bzw. dessen dadurch gegebene Verwindung, was wiederum die Berechnung von Soll-Lasten am Ort dieses Maschinenfusses erlaubt. Dann können die Höhenverstellungen eine nach der anderen gezielt eingestellt werden, bis die jeweilige Soll-Last erreicht und damit die richtige Einstellung aller Höhenverstellungen gegeben ist. Gegebenenfalls kann dies für hohe Einstellgenauigkeit wiederholt werden.

Ein nicht rechnergestütztes Verfahren zum Einrichten einer Maschine ist gegeben, indem jedem der erfindungsgemässen Maschinenfüsse eine vorbestimmte Soll-Last zugeordnet wird und dann und dann die Höhenverstellung desjenigen Maschinenfusses korrigiert wird, dessen Ist-Last die grösste Abweichung von der Soll-Last aufweist, und wobei die Korrektur solange vorgenommen wird, bis ein anderer Maschinenfuss die grösste Abweichung von der Soll-Last aufweist, danach die Höhenverstellung dieses anderen Maschinenfusses korrigiert wird, und so fort, bis die Ist-Last jedes Maschinenfusses innerhalb einer vorbestimmten Abweichung von der ihm zugeordneten Soll-Last liegt.

## Patentansprüche

1. Maschinenfuss (20) mit einer Höhenverstellung (2), die ein Verstellelement und ein massiv ausgebildetes, mit diesem zusammenwirkendes, die in Richtung, der verstellbaren Höhe wirkenden Betriebslast übertragendes und in Richtung dieser Betriebslast steifes Tragelement (21) aufweist, **dadurch gekennzeichnet, daß** das Verstellelement und das Tragelement (21) derart ausgebildet sind, dass sich das Tragelement (21) unter dieser Betriebslast vorbestimmt biegeelastisch deformiert, und dass ein Messelement (41) vorgesehen ist, das den Abstand von Messpunkten erfasst, deren Abstand sich aufgrund der vorbestimmten Deformation ändert.

2. Maschinenfuss nach Anspruch 1, wobei das Verstellelement eine Keilanordnung (7,7') ist und das Tragelement (21) über Gegenflächen mit dieser zusammenwirkt, und wobei das Tragelement (21) und die Keilanordnung (7,7') derart ausgebildet sind, dass die vom Tragelement (21) in die Keilanordnung (7,7') einleitbare Betriebslast gegenüber der in das Tragelement (21) einleitbaren Betriebslast seitlich versetzt verläuft.

3. Maschinenfuss nach Anspruch 2, wobei ein mit dem Tragelement (21) zusammenwirkendes Krafteinleitungselement (22) vorgesehen ist, über welches die Betriebslast zentral in das Tragelement (21) einleitbar ist.

4. Maschinenfuss nach einem der Ansprüche 1 bis 3, wobei das Krafteinleitungselement (22) eine konische Ringfläche (24) für die zentrische Einleitung der Gewichtskräfte in das Tragelement (21) und dieses wiederum eine konische Ansenkung (25) für den Kontakt mit dem Krafteinleitungselement (22) aufweist, und wobei die Steigungen von Ringfläche (24) und Ansenkung (25) verschieden sind, derart, dass sich diese bei betriebsfähigem Kontakt in einem vorbestimmten, vorzugsweise inneren Randbereich (30) berühren

5. Maschinenfuss nach Anspruch 3, wobei das Krafteinleitungselement über einen langgestreckten, sich mittig über das Tragelement erstreckenden Kontaktbereich mit dem Tragelement in Kontakt ist, und wobei der Kontaktbereich vorzugsweise im Wesentlichen parallel zu den Keilflächen der Keilanordnung (7,7') verläuft.

6. Maschinenfuss nach Anspruch 1 oder 2, wobei das Messelement (41) als Längenmesselement ausgebildet ist, das vorzugsweise ein Zugelement (36) aufweist, welches wiederum am einen Messpunkt verankert ist und betriebsfähig mit einem am anderen Messpunkt angeordneten Sensor (40) zusammenwirkt.

7. Maschinenfuss nach Anspruch 3, wobei das Tragelement (21) und/oder die Keilanordnung (7,7') von einer Öffnung (35) durchsetzt sind, die gegenüberliegende Messpunkte mit einander verbindet, und das Messelement ein Zugelement (36) aufweist, das am einen Messpunkt verankert ist, durch die Öffnung (35) verläuft und betriebsfähig mit einem am anderen Messpunkt angeordneten Sensor (40) zusammenwirkt.

8. Maschinenfuss nach einem der Ansprüche 1 bis 4, wobei das Messelement (41) einen Schwingsaitensensor mit einer Schwingsaite aufweist, die durch eine auf das Messelement (41) wirkende Längenänderung eine Änderung ihrer Vorspannung erfährt.

9. Maschinenfuss nach einem der Ansprüche 1 bis 5, wobei mindestens einer der Messpunkte auf einem Fortsatz des Tragelements angeordnet ist, und wobei der der Fortsatz derart an diesem angeordnet ist, dass sich der Abstand der Messpunkte bei einer Änderung der vorbestimmten Durchbiegung verstärkt verändert.

10. Maschine mit einer oder mehreren Maschinenfüssen (20) nach einem der Ansprüche 1 bis 9.

11. Maschine nach Anspruch 10 mit einem Computer und einem Datenspeicher, der Daten betreffend der Deformation des Maschinengestells im Hinblick auf dessen Abstützung gegenüber dem Untergrund enthält, wobei im Computer ein Programm gespeichert ist, das im Betrieb die aktuellen Ist-Werte eines oder mehrerer Maschinenfüsse verarbeitet und entsprechend der Daten über die Deformation des Maschinengestells Soll-Einstellungen für die den einen oder mehreren Maschinenfüssen zugeordneten Anordnungen zur Höhenverstellung generiert.

12. Verfahren zum Einrichten einer Maschine nach Anspruch 10 mit mehreren Maschinenfüssen (20) nach einem der Ansprüche 1 bis 10, wobei jedem Maschinenfuss (20) eine bei aufgestellter Maschine vorhandene Soll-Last zugeordnet und dann die Höhenverstellung desjenigen Maschinenfusses (20) korrigiert wird, dessen Ist-Last die grösste Abweichung von der Soll-Last aufweist, und wobei die Korrektur solange vorgenommen wird, bis eine anderer Maschinenfuss (20) die grösste Abweichung von der Soll-Last aufweist, danach die Höhenverstellung dieses anderen Maschinenfusses (20) korrigiert wird, und so fort, bis die Ist-Last jedes Maschinenfusses (20) innerhalb einer vorbestimmten Abweichung von der ihm zugeordneten Soll-Last liegt.

## Claims

1. A machine base (20) comprising a height adjustment (2) which has an adjusting element and a massively formed carrier element (21) that interacts therewith and transmits the operating load acting in the direction of the adjustable height, and which is stiff in the direction of this operating load, **characterized in that** the adjusting element and the carrier element (21) are formed in such a manner that the carrier element (21) deforms elastically in a predetermined manner under this operating load, and that a measuring element (41) is provided which detects the distance of measuring points, the distance of which changes due to the predetermined deformation.

2. The machine base according to claim 1, wherein the adjusting element is a wedge arrangement (7, 7') and the carrier element (21) interacts therewith via counter surfaces, and wherein the carrier element (21) and the wedge arrangement (7, 7') are formed in such a manner that the operating load which can be transmitted from the carrier element (21) into the wedge arrangement (7, 7') runs laterally offset with respect to the operating load which can be transmitted into the carrier element (21).

3. The machine base according to claim 2, wherein a force transmission element (22) is provided which interacts with the carrier element (21) and via which the operating load can be centrally transmitted into the carrier element (21).

4. The machine base according to any one of the claims 1 to 3, wherein the force transmission element (22) has a conical annular surface (24) for centrally transmitting the weight forces into the carrier element (21), and the latter, in turn, has a conical countersink (25) for the contact with the force transmission element (22), and wherein the inclines of the annular surface (24) and the countersink (25) are different in such a manner that in the case of operable contact, they touch each other in a predetermined, preferably inner edge area (30).

5. The machine base according to claim 3, wherein the force transmission element is in contact with the carrier element via an elongated contact area that extends centrally across the carrier element, and wherein the contact area preferably runs substantially parallel to the wedge surfaces of the wedge arrangement (7, 7').

6. The machine base according to claim 1 or claim 2, wherein the measuring element (41) is formed as a length measuring element which preferably includes a tension element (36), which, in turn, is anchored on a measuring point and interacts in an operational manner with a sensor (40) arranged on the other measuring point.

7. The machine base according to claim 3, wherein an opening (35) passes through the carrier element (21) and/or the wedge arrangement (7, 7'), which opening connects measuring points located opposite one another, and the measuring element has a tension element (36) that is anchored on a measuring point, runs through the opening (35) and interacts in an operational manner with a sensor (40) arranged on the other measuring point.

8. The machine base according to any one of the claims 1 to 4, wherein the measuring element (41) has a vibrating wire sensor comprising a vibrating wire which undergoes a change in its pretension due to a length change acting on the measuring element (41).

9. The machine base according to any one of the claims 1 to 5, wherein at least one of the measuring points is arranged on an extension of the carrier element, and wherein the extension is arranged on the carrier element in such a manner that the distance of the measuring points changes to an increased extent when the predetermined deflection changes.

10. A machine comprising one or more machine bases (20) according to any one of the claims 1 to 9.

11. The machine according to claim 10, comprising a computer and a data storage that contains data relating to the deformation of the machine frame with regard to the support thereof with respect to the subfloor, wherein a program is stored in the computer, which program processes during the operation the current actual values of one or a plurality of machine bases and generates, based on the data on the deformation of the machine frame, target settings for the arrangements for height adjustment associated with the one or the plurality of machine bases.

12. A method for setting up a machine according to claim 10 comprising a plurality of machine bases (20) according to any one of the claims 1 to 10, wherein each machine base (20) is associated with a target load when the machine is installed, and then the height adjustment of that machine base (20) is corrected, the actual load of which shows the greatest deviation from the target load, and wherein the correction is performed until another machine base (20) shows the greatest deviation from the target load, and subsequently the height adjustment of this other machine base (20) is corrected, and so on, until the actual load of each machine base (20) lies within a predetermined deviation from the target load associated with the machine base.

## Revendications

1. Pied de machine (20) comportant un réglage en hauteur (2), qui présente un élément de réglage et un élément porteur (21) coopérant avec celui-ci, transmettant une charge opérationnelle agissant dans la direction de la hauteur réglable et rigide dans la direction de cette charge opérationnelle, **caractérisé en ce que** l'élément de réglage et l'élément porteur (21) sont conçus de telle sorte que l'élément porteur (21) se déforme avec une flexion élastique prescrite sous cette charge opérationnelle, et **en ce qu'**un élément de mesure (41) est prévu, qui détecte l'espacement entre les points de mesure, dont l'espacement varie en raison de la déformation prescrite.

2. Pied de machine selon la revendication 1, dans lequel l'élément de réglage est un dispositif de coin (7, 7') et l'élément porteur (21) coopère avec celui-ci par l'intermédiaire de surfaces opposées, et dans lequel l'élément porteur (21) et le dispositif de coin (7, 7') sont conçus de telle sorte que la charge opérationnelle induite par l'élément porteur (21) dans le dispositif de coin (7, 7') se déroule en décalage latéral par rapport à la charge opérationnelle induite dans l'élément porteur (21).

3. Pied de machine selon la machine 2, dans lequel un élément d'induction de force (22) coopérant avec l'élément porteur (21) est prévu, par l'intermédiaire duquel la charge opérationnelle peut être induite centralement dans l'élément porteur (21).

4. Pied de machine selon une des revendications 1 à 3, dans lequel l'élément d'induction de force (22) présente une surface annulaire conique (21) pour l'induction centrique des forces de pesanteur dans l'élément porteur (21) et celui-ci présente à son tour un chanfreinage (25) en vue du contact avec l'élément d'induction de force (22), et dans lequel les élévations des surfaces annulaires (24) et du chanfreinage (25) sont différentes, de telle sorte que celles-ci se contactent en cas de contact opérationnel dans une zone de bord prédéterminée, de préférence intérieure (30).

5. Pied de machine selon la revendication 3, dans lequel l'élément d'induction de force est en contact avec l'élément porteur par l'intermédiaire d'une zone de contact allongée, s'étendant au centre sur l'élément porteur et dans lequel la zone de contact s'étend de préférence essentiellement parallèlement aux surfaces de coin du dispositif de coin (7, 7').

6. Pied de machine selon les revendications 1 ou 2, dans lequel l'élément de mesure (41) est conçu comme un élément de mesure de longueur, qui présente de préférence un élément de traction (36), qui est à son tour ancré sur un point de mesure et coopère opérationnellement avec un capteur (40) disposé sur l'autre point de mesure.

7. Pied de machine selon la revendication 3, dans lequel l'élément porteur (21) et/ou le dispositif de coin (7, 7') sont traversés par une ouverture (35), qui relie des points de mesure opposés les uns aux autres, et l'élément de mesure présente un élément de traction (36), qui est ancré sur un point de mesure, s'étend à travers l'ouverture (35) et coopère opérationnellement avec un capteur (40) disposé sur l'autre point de mesure.

8. Pied de machine selon une des revendications 1 à 4, dans lequel l'élément de mesure (41) présente un capteur à corde vibrante comportant une corde vibrante, qui subit par l'intermédiaire d'une variation de longueur agissant sur l'élément de mesure (41) une variation de sa précontrainte.

9. Pied de machine selon une des revendications 1 à 5, dans lequel au moins un des points de mesure est disposé sur un prolongement de l'élément porteur, et dans lequel le prolongement est disposé sur celui-ci de telle sorte que l'espacement entre les points de mesure varie fortement lors d'une variation de la flexion prescrite.

10. Machine comportant un ou plusieurs pieds de machine (20) selon une des revendications 1 à 9.

11. Machine selon la revendication 10 comportant un ordinateur et une mémoire de données, qui contient des données relatives à la déformation du bâti de machine en ce qui concerne à son appui par rapport au sol, dans laquelle un programme est mémorisé dans l'ordinateur, qui traite en fonctionnement les valeurs effectives actuelles d'un ou plusieurs pieds de machine et génère de manière correspondante aux données via la déformation du bâti de machine des paramétrages de consignes pour un ou plusieurs dispositifs de réglage en hauteur affectés aux pieds de machine.

12. Procédé d'installation d'une machine selon la revendication 10 comportant plusieurs pieds de machine (20) selon une des revendications 1 à 10, dans lequel une charge de consigne présente quand la machine est posée est coordonnée à chaque pied de machine, et ensuite le réglage en hauteur dudit pied de machine (20) est corrigé, dont la charge effective présente le plus grand écart par rapport à la charge de consigne, et dans lequel la correction est entreprise tant qu'un autre pied de machine (20) présente le plus grand écart par rapport à la charge de consigne, puis le réglage en hauteur de cet autre pied de machine (20) est corrigé, et ainsi de suite jusqu'à ce que la charge effective de chaque pied de machine (20) soit située dans les limites d'un écart prédéterminée par rapport à la charge de consigne qui lui est affectée.
